# EUROPÄISCHE PATENTSCHRIFT

(11) **EP 1 133 342 B1**
(45) Veröffentlichungstag und Bekanntmachung des Hinweises auf die Patenterteilung: **07.01.2004**
(21) Anmeldenummer: 99959294.2
(22) Anmeldetag: 20.11.1999
(51) Int. Cl.: B01D 39/18, B01D 39/20

(54) **MEHRLAGIGES FILTERELEMENT**
MULTI-LAYER FILTER ELEMENT
ELEMENT FILTRANT A COUCHES MULTIPLES

(30) Priorität: 26.11.1998 DE 19854565
(43) Veröffentlichungstag der Anmeldung: 19.09.2001
(73) Patentinhaber: Mann + Hummel GmbH, 71638 Ludwigsburg (DE)
(72) Erfinder: TUMBRINK, Manfred, D-74246 Eberstadt (DE); KRIEGER, Joachim-Paul, D-94419 Reisbach (DE); KLEIN, Gunnar-Marcel, D-73235 Weilheim/Teck (DE)
(74) Vertreter: Voth, Gerhard
(86) Internationale Anmeldenummer: PCT/EP1999/008975
(87) Internationale Veröffentlichungsnummer: WO 2000/030731

(56) Entgegenhaltungen:
- EP-A- 0 048 310
- EP-A- 0 338 479
- DE-U- 29 814 830
- US-A- 5 275 743
- US-A- 5 427 597

## Beschreibung

### Stand der Technik

Die Erfindung betrifft ein mehrlagiges Filterelement für Flüssigkeiten nach der Gattung des Patentanspruches 1.

Mehrlagige Filtermedien sind bekannt. Aus der US 5 427 597 ist z. B. ein Filter für gasförmige Stoffe bekannt, bei dem faserige Lagen zur Vorfilterung auf ein Filterpapier aufgebracht sind. Das Filterpapier ist für die Absolutfilterung des zu filternden Gases verantwortlich. Das Filtermaterial kann zu einem patronenförmigen Verband verarbeitet werden, wobei zylindrische Stützrohre zur Stabilisierung vorgesehen werden.

Zur Flüssigkeitsfiltration kommen auch faserförmige Filtermedien, bestehend z. B. aus Glasfaser, auch als Absolutfilterstufe zur Anwendung. Diese Vliesmatten sind jedoch sehr empfindlich und müssen daher durch weitere Lagen geschützt werden. Insbesondere bei hohen Druckunterschieden zwischen Roh- und Reinseite kommen hierbei drahtförmige Gitter- oder Wickelgeflecht zur Anwendung, wie dies z. B. in der US 5215 661 beschrieben ist. Diese Gittergeflechte vermögen das vliesförmige Filtermedium vor einem Einfallen zur Reinseite des Filters hin zu schützen. Sie sind allerdings zu grobmaschig um ein Auffasern des Vlieses zu verhindern. Daher müssen zusätzliche Spinnvliese zum Schutz der Oberflächen der Hauptfilterlage vorgesehen werden. Dies bewirkt jedoch einen komplexen Aufbau solcher Filterelemente, wobei deren thermische Entsorgung durch die vorhandenen metallische Anteile oder Kunststoffe anderer Sorten erschwert wird.

Ein weiteires mehrlagiges Filterelement für Flüssigkeiten, das eine Lage aus cellulosehaltigen Papier und eine polymerische gitterartige Lage auf der Reinseite aufweist, ist aus der US-A-5 275 743 bekannt.

Die Aufgabe der Erfindung besteht daher darin, ein mehrlagiges Filterelement zu schaffen, weiches kostengünstig in der Herstellung und einfach zu entsorgen ist und für den Einsatz bei hohen Druckunterschieden zwischen Rohseite und Reinseite des Filterelementes geeignet ist.

Diese Aufgabe wird durch die Merkmale des Patentanspruches 1 gelöst.

### Vorteile der Erfindung

Erfindungsgemäß wird die gestellte Aufgabe dadurch gelöst, daß ein mehrlagig aufgebautes Filterelement als reinseitige Lage ein überwiegend zellulosehaltiges Filterpapier aufweist. Auf diese Filterlage können weitere Filterlagen aufgebracht werden. Diese bestehen zumindest aus einer vliesförmigen Hauptfilterlage. Diese kann aus Glasfasern bestehen, es sind allerdings auch andere faserförmige Filtermaterialien denkbar. Weiterhin muß zumindest eine rohseitige Lage auf die Hauptfilterlage aufgebracht werden, die zum Schutz derselben geeignet ist. Hierbei können unterschiedliche Materialien zum Einsatz kommen, z. B. ein Spinnvlies.

Die reinseitige Filterlage aus Papier weist eine geringere Filterfeinheit auf als die Hauptfilterlage. Somit ist die Hauptfilterlage für eine Absolutfiltration des zu filternden Mediums verantwortlich. Die Papierlage hat somit lediglich Stützfunktionen zu gewährleisten. Hierdurch ergibt sich der wesentliche Vorteil, daß das Papier auf diese Aufgabe hin ausgelegt werden kann. Damit ist der Einsatz sehr stabilen Papieres möglich, wobei die Filterfeinheit bewußt sehr grob gewählt wird. Dadurch kann vermieden werden, daß der Strömungswiderstand am Filterelement durch die hohe Papierdicke der stabilen reinseitigen Lage zu stark ansteigt. Die reinseitige Lage ist jedoch in jedem Falle fein genug ausgeführt, daß ein Auffasem der Hauptfilterlage verhindert wird. Die zusätzliche Anordnung eines Spinnvlieses zwischen reinseitiger Lage und Hauptfilterlage ist also nicht erforderlich, wie dies z. B. bei Verwendung einer Drahtgeflechtes als reinseitige Lage notwendig wäre.

Die so ausgebildete reinseitige Filterlage ist am Filterprozess nicht beteiligt. Bei der Absolutfiltration durch die Hauptfilterlage wird in erster Linie die Tiefenfiltrationswirkung des eingesetzten Filtermediums genutzt. Die Hauptfilterlage kann durch die effektive reinseitige Abstützung allein nach Gesichtspunkten einer möglichst guten Tiefenfiltrationswirkung ausgelegt werden. Die verwendeten Fasern können von geringem Durchmesser sein, da die Porengrösse des Papiers, welches die reinseitige Stützlage bildet, in jedem Falle ausreicht, um diese Fasern zurückzuhalten. Die Hauptfilterlage kann weiterhin sehr locker, also mit einer hohen Speicherkapazität für abzuscheidende Partikel ausgeführt sein. Dabei kann die Filterfeinheit der Hauptfilterlage zur Stützlage hin zunehmen, wodurch die Tiefenfiltrationswirkung unterstützt wird, da grobe Teile im rohseitigen Bereich der Hauptfilterlage und feinere Partikel im reinseitigen Bereich der Hauptfilterlage abgeschieden werden. Die Filterfeinheit der Hauptfilterlage muß jedoch zumindest reinseitig so groß gewählt werden, daß die auszufilternden Partikel mit der für den Anwendungsfall definierten Grenzgröße zurückgehalten werden. Die Stützlage kann keine zuverlässige Filterfunktion übernehmen, da die Porengröße dieser Lage hierfür zu groß ist.

Die Verwendung von Papier als Stützlage ohne Filterfunktion kann also die beschriebenen Stützmittel, bestehend aus Drahtgitter und Spinnvlies ersetzen. Hierdurch ergibt sich ein einfacherer Aufbau des mehrschichtigen Filtermediums, was sich auf die Wirtschaftlichkeit der hergestellten Filterelemente auswirkt. Außerdem entsteht ein metallfreier Filterverband, der unproblematischer in der Entsorgung ist. Dieser kann z. B. vollständig verascht werden.

Gemäß einer zweckmäßigen Ausbildung des Erfindungsgedankens übernimmt die rohseitige Lage neben der Schutzfunktion für die Hauptfilterlage ebenfalls die Funktion einer Vorfilterung des zu filternden Fluids. Hierfür muß die Filterfeinheit der rohseitigen Lage derart gewählt werden, daß der Grobanteil der auszufilternden Teilchen in der rohseitigen Lage abgeschieden wird. Hierdurch lassen sich größere Filterstandzeiten erreichen. Außerdem ergibt sich die Möglichkeit, die rohseitige Lage regelmäßig abzureinigen, wodurch die Filterstandzeit weiter erhöht werden kann.

Die rohseitige Lage besteht vorteilhafter Weise auch aus einem überwiegend zellulosehaltigem Filterpapier. Diese kann neben der Schutzfunktion für die Hauptfilterlage und einer evtl. Vorfilterfunktion gleichzeitig Stützfunktion übernehmen. Es entsteht dabei ein dreistufiger Verband aus einer jeweils roh- und reinseitigen Papierlage und mindestens einer vliesförmigen Hauptfilterlage. Im Vergleich zu mehrlagigen Filtern mit Drahtgitteriagen oder anderen gitterförmigen Stützlagen aus Kunststoff zur Stabilisierung läßt sich dieser Verband mit der Falttechnik herkömmlicher Papierfilter verarbeiten. Diese Verarbeitungstechnik ist wesentlich wirtschaftlicher, da die gefalteten Drahtgitterlagen schwieriger in der Handhabung sind. Durch Verwendung von Papierendlagen ist insbesondere die Herstellung sterngefalteter. Filterelemente auf rotierenden Prägefaltmaschinen wirtschaftlich möglich.

Die Verwendung von sog. Meltblown- Vliesen als eine Lage eines Filtermediums ist äußerst vorteilhaft, da diese eine sehr hohe Speicherkapazität für die ausgefilterten Partikel bei einem geringen Durchströmungswiderstand für das zu filternde Medium aufweisen. Dieser Vorteil wird durch die geringen Faserdurchmesser (ca. <2µm) und die große Porösität des Meltblown- Vliesmaterials erreicht. Die Filterwirkung, insbesondere der Abscheidegrad, steigt dabei mit der Aufnahme von ausgefilterten Partikeln während der Gebrauchsdauer zunächst an. Die Filterfeinheit der anströmseitigen Lage ist hierbei so gewählt, daß durch diese Feinlage eine hineinreichend lange Standzeit des Filterelements erreichbar ist.

Günstige Ausführungsformen können im einzelnen dadurch gebildet werden, daß mindestens ein Meltblown- Vlies mit ca. 15 bis 150g/m² Flächengewicht verwendet wird. Als Ausgangsmaterial für das Meltblown- Vlies kommt beispielsweise PP (Polypropylen), insbesondere für nichtaggresive Flüssigkeiten, oder PES (Polyethersulfon) in Frage, das auch bei der Filtrierung von Kraftstoff oder Hydraulikölen Verwendung finden kann. Das Meltblow- Vlies kann kalandriert sein.

Eine vorteilhafte Weiterverarbeitung der erfindungsgemäßen Filteranlagen erfolgt bevorzugt dadurch, daß die aneinandergefügten Lagen der Filtermedien zur Bildung des Filterelements stemgefaltet sind. Insbesondere können die Lagen der Filtermedien vor oder während der Faltung ultraschallverschweißt oder durch Flächenpressung während des Faltvorgangs, beispielsweise an einer Prägefaltmaschine, aneinandergefügt werden. Die Lagen können auch mit einem Klebstoff verklebt werden, wobei auch ein pulverförmiger Klebstoff oder ein Hotmelt- Imprägniermittel Verwendung finden kann.

Die cellulosehaltigen Filterpapiere können auch einen Fremdstoffanteil von bis zu 50% aufweisen, wobei die Fremdstoffe Glas- oder Polyesterfasern sein können.

Als Anwendungsgebiet für das erfindungsgemäße Filterelement kommen beispielsweise Ölfiltersysteme, insbesondere für ein Kraftfahrzeug, in Frage. Jeweils angepasste Kombinationen von wenigen Basiselementen für die Filtermedien erlauben hier eine große Variationsbreite der Filtereigenschaften, so daß hier eine erhöhte Standzeit bei bestehendem Bauvolumen, eine hohe Formstabilität gegen den Druckunterschied zwischen Roh- und Reinseite und ein geringerer Durchftusswiderstand mit relativ einfachen Mitteln erreicht werden kann.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: einen Schnitt durch ein dreilagiges Filtermaterial, wobei ein Filtervlies von zwei Papierlagen eingeschlossen ist,
- Figur 2: den Schnitt durch einen Kreisausschnitt einer stemgefalteten Filterpatrone, wobei eine Hauptfiltervlies reinseitig durch eine Papierlage und rohseitig durch ein Spinnvlies eingeschlossen wird.

### Beschreibung der Ausführungsbeispiele

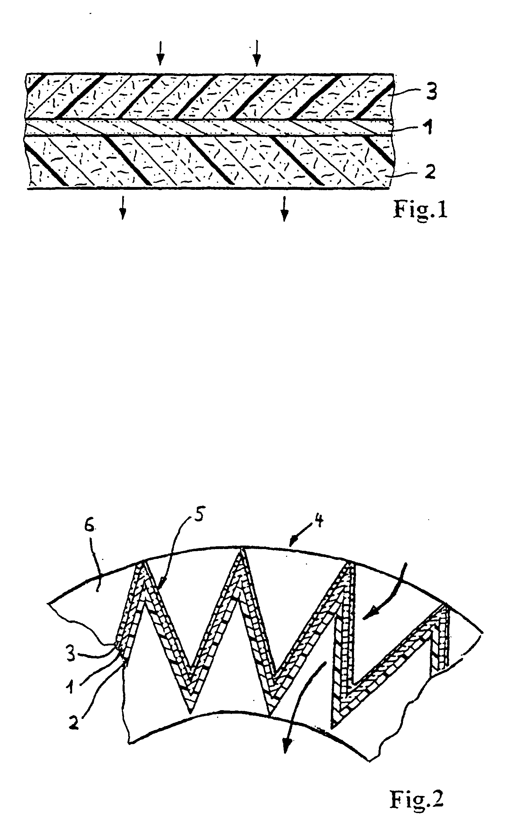

In Figur 1 ist ein dreischichtiges Filtermaterial dargestellt. Die Durchströmungsrichtung des zu filternden Fluids durch das Filtermaterial ist durch Pfeile angedeutet. Die Absolutfiltration wird durch die Hauptfilterlage 1 gewährleistet, die aus einem Meltblown-Vlies besteht. Eine reinseitige Lage 2 besteht aus Filterpapier mit einem geringen Durchflußwiderstand. Dieses dient lediglich der Abstützung des Filtermaterials und zum Schutz der reinseitigen Oberfläche des Meltblown- Vlieses 1. Weiterhin ist eine rohseitige Lage 3, bestehend aus Filterpapier, vorgesehen. Diese Papierlage erzeugt im Zusammenwirken mit der reinseitigen Lage 2 eine zusätzliche Stützfunktion. Außerdem schützt sie die reinseitige Oberfläche des Meltblown- Vlieses. Die Filterfeinheit der rohseitigen Lage 3 ist zu dem derart gewählt, daß bei Durchströmung durch das zu filternde Fluid eine Vorabscheidung stattfindet.

Als Ausgangsmaterial für das Meltblown- Vlies kommt beispielsweise PP (Polypropylen), insbesondere für nichtaggressive Flüssigkeiten, oder PES (Polyethersulfon) in Frage.

Zur Weiterverarbeitung der anhand der Figur 1 beschriebenen Filterlagen werden die aneinandergefügten Lagen der Filtermedien gemäß der Skizze nach Figur 2 zur Bildung eines Filterelements 4 stemgefaltet. Hierbei können die Lagen der Filtermedien vor oder während der Faltung ultraschallverschweißt, durch Klebung oder durch Flächenpressung während der Faltvorgangs, beispielsweise an einer Prägefaltmaschine aneinandergefügt werden.

Das Filterelement gemäß Figur 2 kann radial von außen nach innen oder von innen nach außen durchströmt werden, abhängig von jeweiligem Einsatzbereich durchströmt. Das Filtermaterial 5 ist in Endscheiben 6, die z. B:. als Folienendscheiben ausgeführt sein können, eingebracht. Die Ausbildung der rohseitigen Lage 3 kann alternativ durch Verwendung eines Spinnvlieses mit einem Flächengewicht von z. B. 17g/m² erfolgen.

## Patentansprüche

1. Filterelement für Flüssigkeiten bei dem in Durchströmungsrichtung gesehen mehrere metallfreie Lagen von Filtermedien aufeinanderfolgen, wobei eine einzige reinseitige Lage (2), zumindest eine vliesförmige Hauptfilterlage (1), insbesondere aus Glasfaser, und eine rohseitige Lage (3) vorgesehen sind, wobei die rohseitige Lage (3) und die reinseitige Lage (2) eine geringere Filterfeinheit aufweisen, als die Hauptfilterlage, welche zur Absolutfiltration des zu filternden Fluids vorgesehen ist, wobei die reinseitige Lage (2) als Stützlage dient, und wobei die reinseitige Lage aus einem cellulosehaltigen Filterpapier besteht und die Hauptfilterlage aus einem Meltbtown-Vlies, insbesondere kalandrierten Meltblown-Vlies, mit einem Flächengewicht von 15 bis 150 g/m² besteht.

2. Filterelement nach Anspruch 1, **dadurch gekennzeichnet, daß** die rohseitige Lage (3) eine Filterfeinheit aufweist, die für den Grobanteil von Teilchen im zu filternden Fluid eine Barriere darstellt.

3. Filterelement nach einem der vorhergehenden Ansprüche, **dadurch gekennzeichnet, daß** die rohseitige Lage (3) aus einem cellulosehaltigen Filterpapier besteht.

4. Filterelement nach einem der vorhergehenden Ansprüche, **dadurch gekennzeichnet, daß** die aneinandergefügten Filtermedien zur Bildung des Filterelements (4) stemgefaltet sind.

5. Filterelement nach einem der vorhergehenden Ansprüche, **dadurch gekennzeichnet, daß** die Lagen (1, 2, 3) der Filtermedien ultraschallverschweißt sind.

6. Filterelement nach einem der Ansprüche 1 bis 4, **dadurch gekennzeichnet, daß** die Lagen (1, 2, 3) der Filtermedien durch Flächenpressung während eines Faltvorgangs aneinandergefügt sind.

7. Filterelement nach einem der Ansprüche 1 bis 4, **dadurch gekennzeichnet, daß** die Lagen (1, 2, 3) der Filtermedien durch Klebung mit pulverförmigem Kleber oder mit einem Hotmelt- Imprägniermittel oder durch Flächenpressung während eines Faltvorgangs aneinandergefügt sind.

8. Filterelement nach einem der vorhergehenden Ansprüche, **dadurch gekennzeichnet, daß** eine oder mehrere der cellulosehaltigen Filterlagen (2, 3) einen Anteil von bis zu 50% aus synthetischen Fasern, insbesondere Polyester oder Glasfasern, aufweist.

9. Filterelement nach einem der vorhergehenden Ansprüche, **dadurch gekennzeichnet, daß** das Filterelement als Haupt- oder Nebenstromfilter in einem Öloder Kraftstoffiltersystem, insbesondere für ein Kraftfahrzeug, angewendet wird.

## Claims

1. Filter element for fluids, wherein, when viewed with respect to the throughflow direction, a plurality of metal-free layers of filter media succeed one another, wherein a single layer (2) on the filtered air side, at least one main filter layer (1) which is in the form of a non-woven fabric and is more especially formed from glassfibre, and a layer (3) on the unfiltered side are provided, wherein the layer (3) on the unfiltered side and the layer (2) on the filtered side have a finer grade of filtration than the main filter layer which is provided for the absolute filtration of the fluid to be filtered, wherein the layer (2) on the filtered side serves as a supporting layer, and wherein the layer on the filtered side is formed from a cellulose-containing filter paper, and the main filter layer is formed from a melt-blown non-woven fabric, more especially a calendered melt-blown non-woven fabric, having a weight per unit area of 15 to 150 g/m².

2. Filter element according to claim 1, **characterised in that** the layer (3) on the unfiltered side has a filter fineness which constitutes a barrier for the coarse proportion of particles in the fluid to be filtered.

3. Filter element according to one of the preceding claims, **characterised in that** the layer (3) on the unfiltered side is formed from a cellulose-containing filter paper.

4. Filter element according to one of the preceding claims, **characterised in that** the interconnected filter media are folded radially to form the filter element (4).

5. Filter element according to one of the preceding claims, **characterised in that** the layers (1, 2, 3) of the filter media are welded ultrasonically.

6. Filter element according to one of claims I to 4, **characterised in that** the layers (1, 2, 3) of the filter media are interconnected by contact pressing during a folding process.

7. Filter element according to one of claims 1 to 4, **characterised in that** the layers (1, 2, 3) of the filter media are joined together by adhesion using a pulverulent adhesive or a hot-melt impregnating agent or by contact pressing during a folding process.

8. Filter element according to one of the preceding claims, **characterised in that** one or more of the cellulose-containing filter layers (2, 3) has or have a proportion, up to 50 %, of synthetic fibres, more especially polyester or glass fibres.

9. Filter element according to one of the preceding claims, **characterised in that** the filter element is used as a main or secondary flow filter in an oil or fuel filter system, more especially for an automotive vehicle.

## Revendications

1. Elément de filtre pour des liquides avec plusieurs couches de milieu filtrant sans métal qui se succèdent dans la direction de passage, avec une unique couche (2) du côté filtré, au moins une couche principale de filtre (1) formée par du non tissé en particulier avec des fibres de verre, et une couche (3) du côté brut,
dans lequel
la couche (3) du côté brut et la couche (2) du côté filtré ont une finesse de filtre plus réduite que la couche de filtre principale, celle-ci étant prévue pour la filtration absolue du fluide à filtrer, la couche (2) du côté filtré sert de couche de support, la couche du côté filtré (2) est formée de papier filtre contenant de la cellulose et la couche du filtre principal est formée d'un non tissé soufflé à l'état fondu en particulier un non tissé soufflé à l'état fondu, calandré, ayant une densité surfacique de 15 à 150 g/m².

2. Elément de filtre selon la revendication 1,
**caractérisée en ce que**
la couche (3) du côté brut présente une finesse de filtre qui constitue une barrière pour la partie grossière des particules contenues dans le liquide à filtrer.

3. Elément de filtre selon l'une des revendications précédentes,
**caractérisé en ce que**
la couche (3) du côté brut est du papier filtre contenant de la cellulose.

4. Elément de filtre selon l'une des revendications précédentes,
**caractérisé en ce que**
les milieux successifs sont pliés en étoile pour former l'élément de filtre (4).

5. Elément de filtre selon l'une des revendications précédentes,
**caractérisé en ce que**
les couches (1, 2, 3) du milieu filtrant sont soudées aux ultrasons.

6. Elément de filtre selon l'une des revendications 1 à 4,
**caractérisé en ce que**
les couches (1, 2, 3) des milieux filtrant sont imbriquées par compression de surface pendant une opération de pliage.

7. Elément de filtre selon l'une des revendications 1 à 4,
**caractérisé en ce que**
les couches (1, 2, 3) des milieux filtrant sont assemblées par collage avec de la colle à l'état de poudre ou un agent d'imprégnation fusible à chaud ou par compression surfacique pendant une opération de pliage pour être imbriquées.

8. Elément de filtre selon l'une des revendications précédentes,
**caractérisé en ce qu'**
une ou plusieurs des couches de filtre contenant de la cellulose (2, 3) présentent une teneur allant jusqu'à 50 % de fibres de synthèse notamment de polyester ou de fibre de verre.

9. Elément de filtre selon l'une des revendications précédentes,
**caractérisé en ce que**
l'élément de filtre est utilisé comme filtre principal ou comme filtre de courant auxiliaire dans un système de filtre de carburant ou d'huile notamment appliqué à un véhicule automobile.
